# EUROPEAN PATENT APPLICATION

(11) **EP 4 819 297 A1**
(43) Date of publication of application: **07.10.2026**
(21) Application number: 25180264.1
(22) Date of filing: 02.06.2025
(51) Int. Cl.: H01M 10/613, H01M 10/6568, H01M 50/358, H01M 50/392

(54) **SINGLE-LAYERED IMMERSION COOLING BATTERY MODULE AND STACKED IMMERSION COOLING BATTERY MODULE**

(30) Priority: 02.04.2025 TW 114112812
(71) Applicant: ETI CA Battery Inc., New Taipei City 241 (TW)
(72) Inventor: WU, Wei-Chen, New Taipei City (TW)
(74) Representative: Balder IP Law, S.L.

(57) **Abstract**

A single-layered immersion cooling battery module (A1) including a tank (10), an upper cover (20), and a gas filtering device (30) is disclosed. The tank (10) is filled with an insulating cooling liquid to immerse the battery cell (12) and the battery management circuit board (13) accommodated therein. The upper cover (20) is arranged on the top of the tank (10) and penetrated with a gas discharging channel (200) that is provided with a pressure relieving and superheat releasing device (22) for adjusting the pressure or temperature of the closed space. The device (22) opens the gas discharging channel (200) based on the pressure or temperature thereof, discharging the generated gas. A gas filtering device (30), on the top of the upper cover (20) and with a gas outlet (32), covers the pressure relieving and superheat releasing device (22). The gas filtering device (30) can filter and absorb the generated gas (90) and then discharge it, guaranteeing safety, heat dissipation efficiency, and durability of the module.

## Description

### BACKGROUND OF THE INVENTION

### Field of the Invention

The invention relates to a technical field for immersion cooling battery modules, particularly to a single-layered immersion cooling battery module and a stacked immersion cooling battery module for managing discharged gas.

### Description of the Related Art

When thermal runaway occurs in typical energy storage batteries, a series of irreversible chemical reactions take place inside the battery, leading to intense internal heat release. These reactions not only generate high temperatures but also release toxic gases and harmful or corrosive substances. Therefore, current fire-fighting systems for energy storage batteries are often designed to spray specialized battery fire-fighting water or chemicals, aiming to achieve rapid cooling and fire suppression. However, spraying fire-fighting water or chemicals is generally ineffective in suppressing the generation of toxic gases, especially in enclosed spaces (e.g., residential areas or indoor environments). The toxic gases not only harm human health and the environment, but may also exacerbate high-temperature reactions, producing more toxic gases, increasing internal pressure, and ultimately triggering fires or explosions.

Researchers have developed immersion cooling battery technology to avoid thermal runaway in energy storage batteries. This technology immerses battery cells in an insulating cooling liquid, uses the cooling liquid to exchange heat with the battery, and transfers away the heat generated by the battery, thereby reducing the temperature of the battery and preventing large-scale thermal propagation. However, in current immersion cooling battery modules, the connectors are immersed in the cooling liquid for long periods, leading to seal failure, material corrosion, increased fluid resistance, and maintenance difficulties. For instance, seal failure can cause leakage of the cooling liquid, which may result in the short-circuit events of batteries or reduced cooling efficiency. Some cooling liquids are prone to corroding metals or sealing materials, affecting the durability of connectors. If the selected cooling liquid is conductive, it may short-circuit or insulate the localized area of the connector. Additionally, the design of fully immersing the electrical connectors makes maintenance and inspection more challenging.

To overcome the abovementioned problems, the invention provides a single-layered immersion cooling battery module and a stacked immersion cooling battery module, so as to solve the afore-mentioned problems of the prior art.

### SUMMARY OF THE INVENTION

The objective of the invention is to provide single-layered and stacked immersion cooling battery modules for managing discharged gas. The battery modules effectively manage discharged toxic gas. Using a discharged structure and a gas filtering device, the gas inside the battery module can be properly released in the event of thermal runaway, thereby avoiding the risk of explosion caused by abnormally increased pressure or temperature and optimizing the circulation channel of a cooling liquid to reduce fluid resistance. At the same time, another objective of the invention is to improve the durability of an electrical connector and the system stability, avoid the sealing failure caused by immersing the connector in the cooling liquid for a long time, reduce the maintenance cost and detection difficulty, and improve the convenience of system maintenance.

In order to achieve the foregoing purposes, a single-layered immersion cooling battery module includes a tank, an upper cover, and a gas filtering device. The tank has an accommodation space. At least one battery cell and a battery management circuit board are arranged in the accommodation space. The accommodation space is filled with an insulating cooling liquid to immerse the battery cell and the battery management circuit board. The upper cover is arranged on the top of the tank and penetrated with a gas discharging channel. The gas discharging channel is provided with a pressure relieving and superheat releasing device, so that the tank and the upper cover form a closed space. The pressure relieving and superheat releasing device opens the gas discharging channel based on the pressure or temperature of the closed space, so that the accommodation space communicates with the gas discharging channel. The gas discharging channel guides generated gas in the closed space to flow out, so as to adjust the pressure or temperature of the closed space. The gas filtering device, arranged on the top of the upper cover, covers the pressure relieving and superheat releasing device. A side of the gas filtering device is provided with a gas outlet. The gas filtering device is configured to filter the generated gas and discharge the filtered generated gas from the gas outlet.

In an embodiment of the invention, when the pressure of the closed space is equal to or greater than a pressure threshold value or when the temperature of the closed space is equal to or greater than a temperature threshold value, the pressure relieving and superheat releasing device opens the gas discharging channel or breaks such that the accommodation space communicates with the gas discharging channel.

In an embodiment of the invention, the pressure relieving and superheat releasing device is a gasket or a sticker for sealing. When the pressure of the closed space is equal to or greater than a pressure threshold value or when the temperature of the closed space is equal to or greater than a temperature threshold value, the gasket or the sticker automatically breaks or deforms such that the accommodation space communicates with the gas discharging channel.

In an embodiment of the invention, the gas filtering device includes an outer casing and an adsorption layer. The outer casing wraps the adsorption layer. The adsorption layer covers the pressure relieving and superheat releasing device. The adsorption layer may be activated carbon, zeolite, acid neutralizer, or volatile catalyst.

In an embodiment of the invention, the single-layered immersion cooling battery module further includes a gas discharging tube that is arranged outside the tank and connected to the gas outlet for discharging the filtered generated gas.

In an embodiment of the invention, an electrical connector is arranged above the upper cover. The electrical connector is provided with electrical plugs. The horizontal heights of the electrical plugs are higher than the height of the surface of the insulating cooling liquid.

In an embodiment of the invention, the bottom of the tank is provided with an aligned recess, which is recessed toward the closed space to form a clearance space outside the tank.

According to the purposes of the invention, the invention provides a stacked immersion cooling battery module that includes layered structures and a gas discharging tube. Each layered structure has the single-layered immersion cooling battery module. The single-layered immersion cooling battery modules of the layered structures are vertically stacked. The gas discharging tube is arranged outside the tanks of the layered structures and connected to the gas outlets of the layered structures for discharging the generated gas.

In an embodiment of the invention, the lower side of the gas discharging tube is penetrated with holes respectively connected to the gas outlets of the layered structures. The upper side of the gas discharging tube guides the generated gas to the outside.

In an embodiment of the invention, an electrical connector is arranged above the upper cover of the single-layered immersion cooling battery module of each of the layered structures. The electrical connector is provided with electrical plugs. The horizontal heights of the electrical plugs of each of the layered structures are higher than the height of the surface of the insulating cooling liquid of each of the layered structures. The bottom of the tank in the single-layered immersion cooling battery module of each of the layered structures is provided with an aligned recess, which is recessed toward the closed space to form a clearance space. The aligned recess of the upper layered structure is aligned to the electrical connector of the lower layered structure to tightly stack the layered structures.

According to the purposes of the invention, the invention provides a stacked immersion cooling battery module that includes layered structures, connection tubes, and gas discharging tubes. Each layered structure has the single-layered immersion cooling battery module. The single-layered immersion cooling battery modules of the layered structures are vertically stacked. The connection tubes are respectively connected to the gas outlets of the layered structures. The gas discharging tubes are arranged outside the tanks of the layered structures and respectively connected to the corresponding connection tubes to form a closed loop channel.

In an embodiment of the invention, the stacked immersion cooling battery module further includes a fire-fighting water tank and an air circulation driving device. The fire-fighting water tank, accommodating a fire-fighting liquid, is arranged above the layered structures and connected to the gas discharging tube. The air circulation driving device is arranged on one side of the fire-fighting water tank, connected to the gas discharging tube, and configured to drive the generated gas to circulate among the single-layered immersion cooling battery modules of each of the layered structures. The fire-fighting water tank is provided with a hot melt induction sprinkler head, which includes a hot melt material or a melting point sensitive material. When the hot melt induction sprinkler head senses ambient temperature greater than a preset temperature, the hot melt induction sprinkler head automatically melts or deforms such that the fire-fighting liquid flows out. The fire-fighting liquid may be non-conductive deionized water, fluorinated liquid, silicone oil, or synthetic insulating oil.

To sum up, the single-layered and stacked immersion cooling battery modules of the invention combines the gas filtering device with the immersion cooling design to discharge the gas, such that the battery module effectively dissipates heat and adjusts internal pressure or temperature during operation while improving the safety and durability of the battery system. When thermal runaway occurs in the energy storage battery, toxic gases can be managed, effectively reducing the concentration of toxic gases and reducing harm to the environment and human body. Furthermore, the single-layer and stacked immersion cooling structures ensure that the cooling liquid can be evenly distributed and efficiently remove the heat generated by the battery, reducing the risk of thermal runaway. The overall structural design can prevent the electrical connectors from being immersed in the cooling liquid for a long time, which effectively improves the durability of the connectors and extends the service life, heat dissipation efficiency and durability of the battery module.

Below, the embodiments are described in detail in cooperation with the drawings to make easily understood the technical contents, characteristics and accomplishments of the invention.

### BRIEF DESCRIPTION OF THE DRAWINGS

Fig.1 is a side view of a single-layered immersion cooling battery module according to an embodiment of the invention;
Fig.2 is a perspective view of a single-layered immersion cooling battery module according to an embodiment of the invention;
Fig.3 is a front view of Fig.2, wherein electrical connectors are omitted;
Fig.4 is a diagram schematically illustrating thermal runaway that occurs in the battery cell of Fig.1;
Fig.5 is a side view of a stacked immersion cooling battery module according to a first embodiment of the invention;
Fig.6 is a diagram schematically illustrating the stacked modules of Fig.5;
Fig.7 is a perspective view of a stacked immersion cooling battery module according to a second embodiment of the invention;
Fig.8 is a perspective view of a stacked immersion cooling battery module according to a third embodiment of the invention; and
Figs.9-11 are diagrams schematically illustrating a stacked immersion cooling battery module according to a fourth embodiment of the invention.

### DETAILED DESCRIPTION OF THE INVENTION

Reference will now be made in detail to embodiments illustrated in the accompanying drawings. Wherever possible, the same reference numbers are used in the drawings and the description to refer to the same or like parts. In the drawings, the shape and thickness may be exaggerated for clarity and convenience. This description will be directed in particular to elements forming part of, or cooperating more directly with, methods and apparatus in accordance with the present disclosure. It is to be understood that elements not specifically shown or described may take various forms well known to those skilled in the art. Many alternatives and modifications will be apparent to those skilled in the art, once informed by the present disclosure.

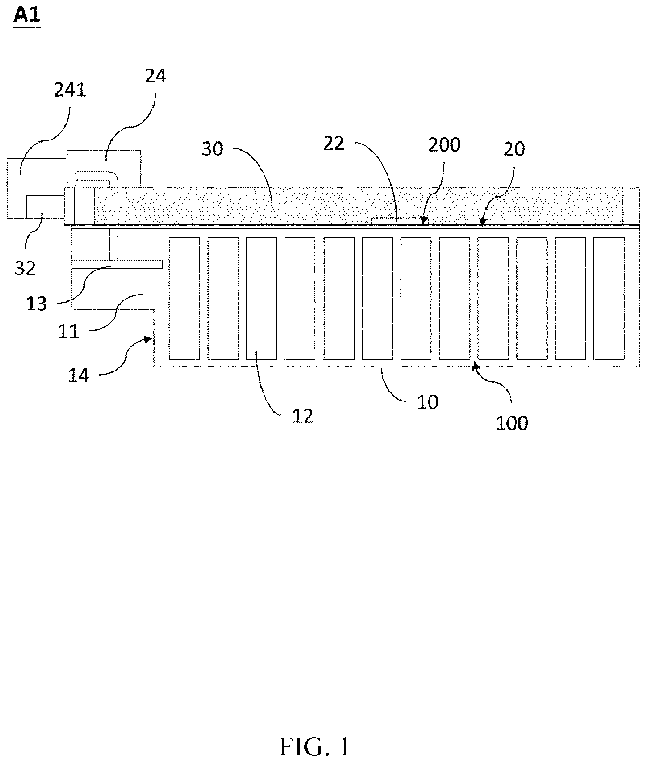

According to an embodiment of the invention, a single-layered immersion cooling battery module is introduced as follows. Please refer to Figs.1-4. A single-layered immersion cooling battery module A1 includes a tank 10, an upper cover 20, and a gas filtering device 30. The tank 10 has an accommodation space 100. At least one battery cell 12 and a battery management circuit board 13 are arranged in the accommodation space 100. The accommodation space 100 is filled with an insulating cooling liquid 11 to immerse the battery cell 12 and the battery management circuit board 13. The upper cover 20 arranged on the top of the tank 10 and penetrated with a gas discharging channel 200. The gas discharging channel 200 is provided with a pressure relieving and superheat releasing device 22, so that the tank 10 and the upper cover 20 form a closed space. The pressure relieving and superheat releasing device 22 opens the gas discharging channel 200 based on the pressure or temperature of the closed space, so that the accommodation space 100 communicates with the gas discharging channel 200. The gas discharging channel 200 guides generated gas 90 in the closed space to flow out, so as to adjust the pressure or temperature of the closed space. The gas filtering device 30, arranged on the top of the upper cover 20, covers the pressure relieving and superheat releasing device 22. A side of the gas filtering device 30 is provided with a gas outlet 32. The gas filtering device 30 absorbs the generated gas 90 and discharges the filtered generated gas 90 through the gas outlet 32.

As illustrated in Fig.1, an electrical connector 24 is arranged above the upper cover 20. The electrical connector 24 is provided with electrical plugs 241. The horizontal heights of the electrical plugs 241 are higher than the height of the surface of the insulating cooling liquid 11. The external electrical connector 24 can be raised above the liquid level of the insulating cooling liquid 11, thereby preventing the insulating cooling liquid 11 from leaking from the external electrical connector 24. The bottom of the tank 10 is provided with an aligned recess 14, which is recessed toward the closed space to form a clearance space outside the tank 10.

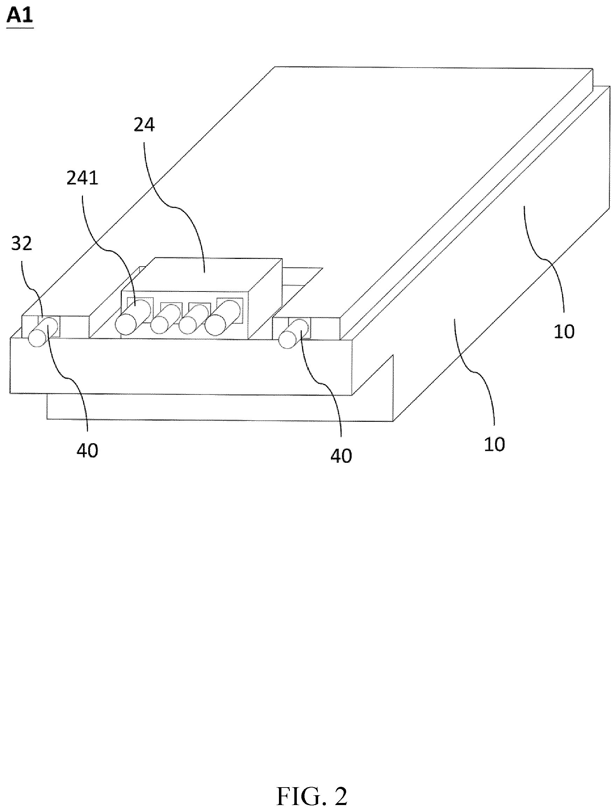

As illustrated in Fig.2, the single-layered immersion cooling battery module A1 further includes a gas discharging tube 40 that is arranged outside the tank 10 and connected to the gas outlet 32 for discharging the generated gas. The length and size of the gas discharging tube 40 can be adaptable according to requirements. In the embodiment, the gas discharging tube 40 can be directly connected to the gas outlet 32. In other embodiments, an extension tube or a connection tube can be added between the gas discharging tube 40 and the gas outlet 32 so that the gas discharging tube 40 and the gas outlet 32 can be tightly combined, thereby guiding the generated gas to be discharged.

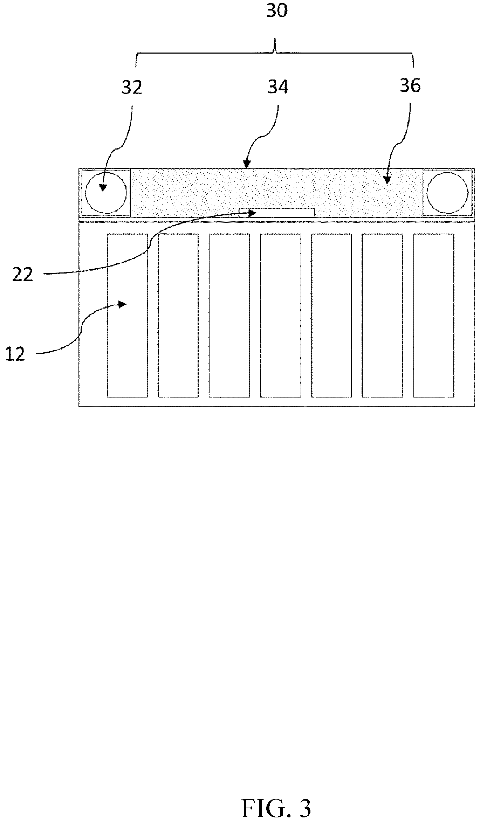

As illustrated in Fig.3, the gas filtering device 30 includes an outer casing 34 and an adsorption layer 36. The outer casing 34 wraps the adsorption layer 36. The adsorption layer 36 covers the pressure relieving and superheat releasing device 22. Preferably, the adsorption layer 36 is activated carbon, zeolite, acid neutralizer, or volatile catalyst. The acid neutralizer may be, for example, calcium carbonate or calcium hydroxide. The volatile catalyst may be, for example, manganese dioxide. When the battery cell 12 generates the generated gas with high pressure due to thermal runaway, the generated gas can first be filtered and adsorbed by the adsorption layer 36, so that the toxic substances can be attached to the adsorption layer 36. Then, the filtered generated gas is discharged to the gas outlet 32.

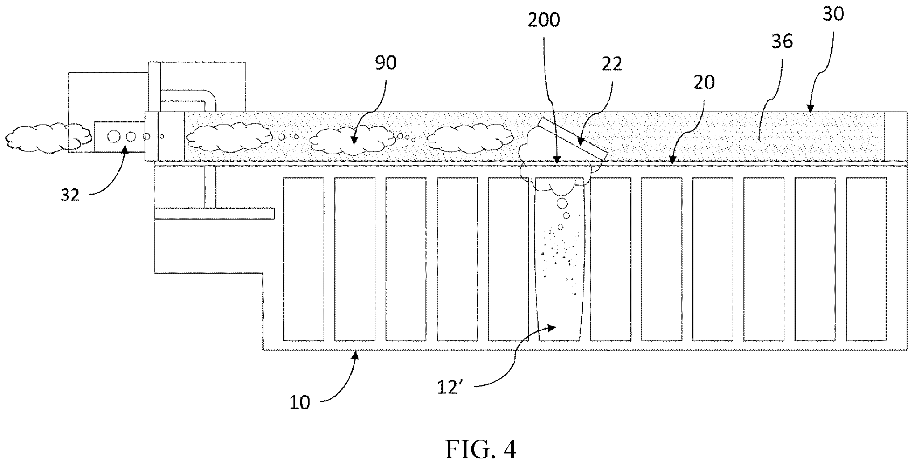

As illustrated in Fig.4, when one of battery cells 12' experiences thermal runaway, the generated gas 90 with high temperature and high pressure is released, such as flammable gases (e.g., H₂, CH₄, or C₂H₄), toxic gases (e.g., HF or phosphate), and volatile gases (e.g., VOC). When the pressure of the closed space is equal to or greater than a pressure threshold value or when the temperature of the closed space is equal to or greater than a temperature threshold value, the pressure relieving and superheat releasing device 22 opens the gas discharging channel 200 or breaks such that the accommodation space 100 communicates with the gas discharging channel 200. Thus, the generated gas 90 can pass through the gas discharging channel 200 and enter the adsorption layer 36 of the gas filtering device 30. Finally, the filtered generated gas 90 is discharged from the gas outlet 32. The pressure threshold value or the temperature threshold value can be adaptable according to requirements and the material or setting of the pressure relieving and superheat releasing device 22, so that the invention can effectively sense the variation of pressure or temperature in applications and effectively activate the pressure relieving and superheat releasing device 22.

In other embodiments, the pressure relieving and superheat releasing device 22 is a gasket or a sticker for sealing. When the pressure of the closed space is equal to or greater than a pressure threshold value or when the temperature of the closed space is equal to or greater than a temperature threshold value, the gasket or the sticker automatically breaks or deforms such that the accommodation space 100 communicates with the gas discharging channel 200. Therefore, the invention can be applied to two different scenarios. When the temperature of the closed space below the pressure relieving and superheat releasing device 22 is too high but the pressure of the closed space is not too high, the pressure relieving and superheat releasing device 22 will still open the gas discharging channel 200, such that the accommodation space 100 communicates with the gas discharging channel 200. Alternatively, when the pressure of the closed space is too high but the temperature of the closed space is not too high, the pressure relieving and superheat releasing device 22 will open the gas discharging channel 200, so that the accommodation space 100 communicates with the gas discharging channel 200.

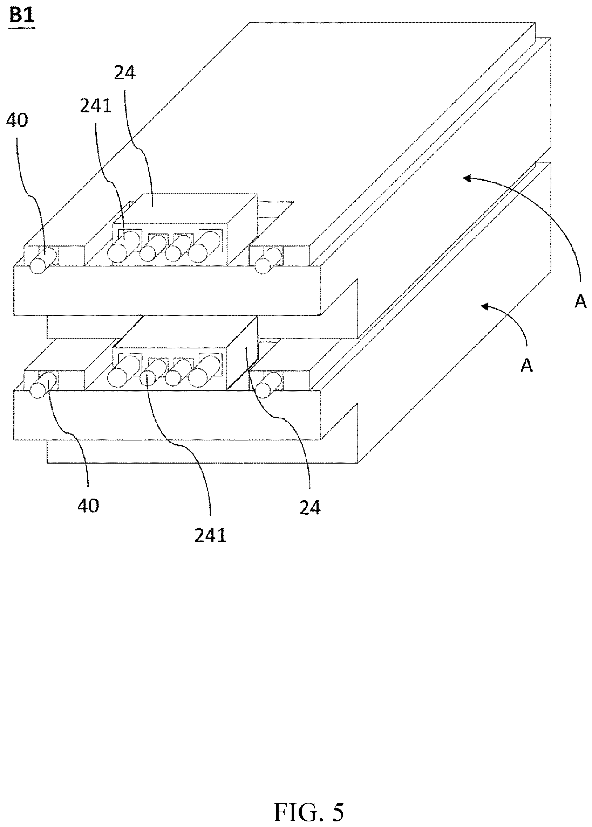

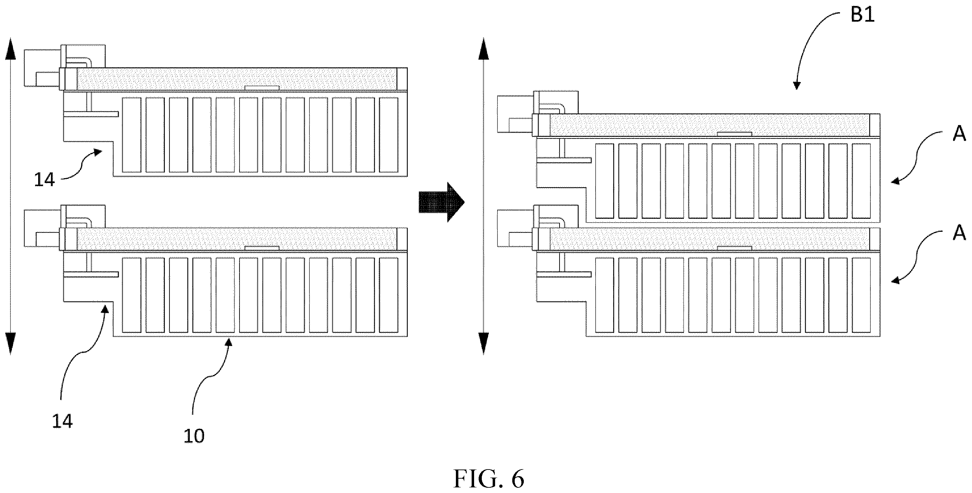

The first embodiment of the stacked immersion cooling battery module is introduced as follows. Please refer to Fig.5 and Fig.6. A stacked immersion cooling battery module B1 includes layered structures A and a gas discharging tube 40. Each layered structure A has the foregoing single-layered immersion cooling battery module, wherein the same components will not be reiterated. As illustrated in Fig.5 and Fig.6, the embodiment includes two layered structures A, but the invention is not limited thereto. The single-layered immersion cooling battery modules of the layered structures A are vertically stacked.

The single-layered immersion cooling battery module of each layered structure A is provided with an electrical connector 24. The electrical connector 24 is provided with electrical plugs 241. The horizontal heights of the electrical plugs 241 of each of the layered structures A are higher than the height of the surface of the insulating cooling liquid of each of the layered structures A. As a result, the sealing ring of the electrical connector 24 will not be immersed in the insulating cooling liquid, which can effectively avoid leakage of the insulating cooling liquid caused by deterioration or deformation of the sealing ring of the electrical connector in the prior art. Therefore, the structure of the invention can ensure that the insulating cooling liquid will not leak out from the sealing location of the electrical connector 24.

The bottom of the tank 10 in the single-layered immersion cooling battery module A1 of each of the layered structures A is provided with an aligned recess 14, which is recessed toward the closed space to form a clearance space. The aligned recess 14 of the upper layered structure A is aligned to the electrical connector 24 of the lower layered structure A to tightly stack the layered structures. As a result, the stacked immersion cooling battery module B1 can reduce the overall stacking height. In applications, the stacked immersion cooling battery module B1 can make effective use of space according to requirements of products. At the same time, the heat accumulation among the layered structures A can be also reduced, thereby making the overall cooling effect better.

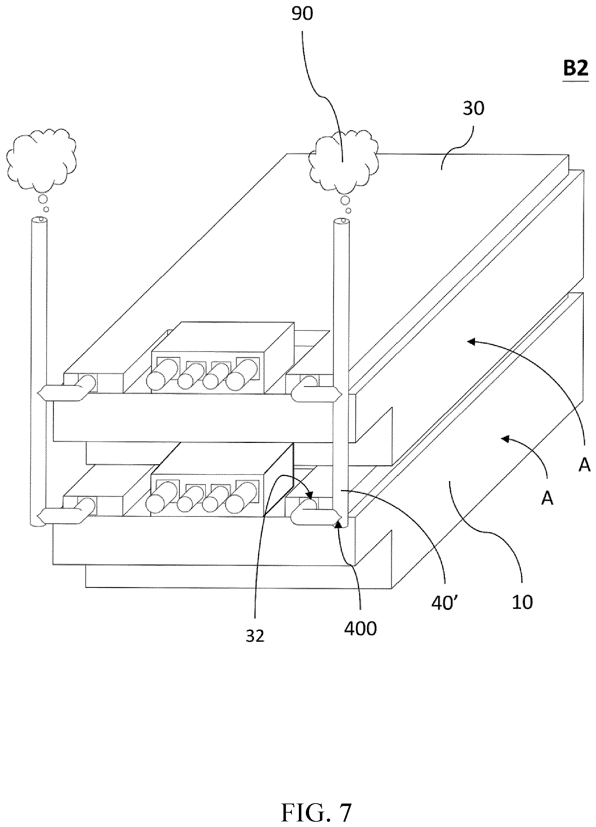

Please refer to Fig.7. The second embodiment of a stacked immersion cooling battery module B2 is introduced as follows. The second embodiment is different from the first embodiment in a gas discharging tube 40' that is arranged outside the tanks 10 of the layered structures A and connected to the gas outlets 32 of the layered structures A for discharging the generated gas 90. The lower side of the gas discharging tube 40' is penetrated with holes 400 respectively connected to the gas outlets 32 of the layered structures A. The upper side of the gas discharging tube 40' guides the generated gas 90 to outside. As a result, when thermal runaway occurs in the tank 10 of any layered structure, the pressure or temperature of the tank 10 will be greater than external pressure or external temperature. At this time, the upper side of the gas discharging tube 40' is opened to allow the internal generated gas 90 to flow smoothly, thereby preventing the generated gas 90 from being retained in the tank 10, the gas filtering device 30, or the gas discharging tube 40'.

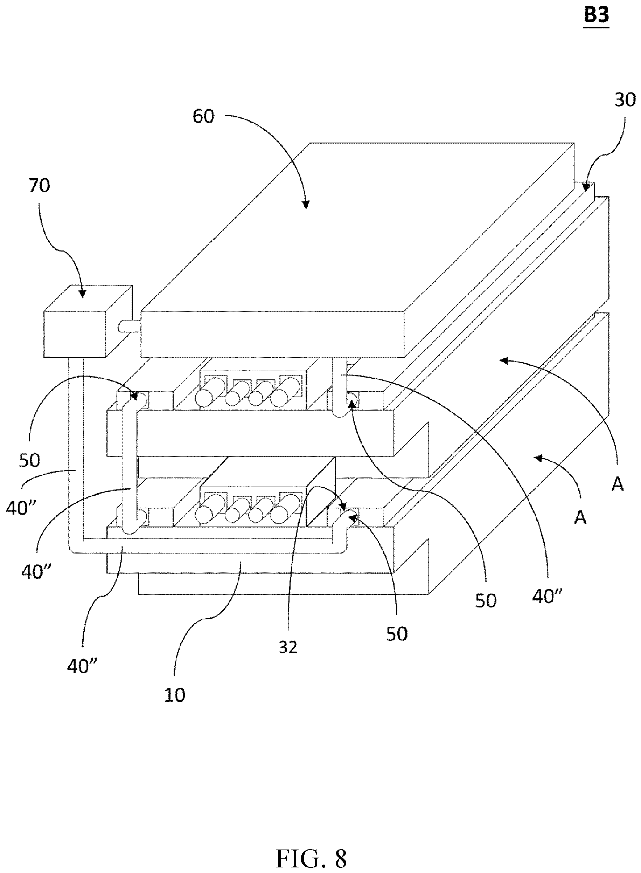

Please refer to Fig.8. The third embodiment of a stacked immersion cooling battery module B3 is introduced as follows. The stacked immersion cooling battery module B3 includes layered structures, connection tubes 50, gas discharging tubes 40". As mentioned above, each layered structure A has the single-layered immersion cooling battery module A1. The connection tubes 50 are respectively connected to the gas outlets 32 of the layered structures A. The gas discharging tubes 40" are arranged outside the tanks 10 of the layered structures A and respectively connected to the corresponding connection tubes 50 to form a closed loop channel.

The stacked immersion cooling battery module B3 further includes a fire-fighting water tank 60 and an air circulation driving device 70. The fire-fighting water tank 60, accommodating a fire-fighting liquid, is arranged above the topmost layered structure A and connected to the gas discharging tube 40". The air circulation driving device 70, arranged on one side of the fire-fighting water tank 60 and connected to the gas discharging tube 40", drives the generated gas to circulate among the single-layered immersion cooling battery modules of each of the layered structures A. For example, the air circulation driving device 70 is an exhaust fan.

Therefore, the embodiment can effectively prevent toxic gases from leaking to the outside, reduce harm to the environment and personnel, and improve safety. The gas filtering device 30 of each layered structure A can properly filter or adsorb the generated gas, thereby absorbing or neutralizing the toxic gas to prevent it from flowing out. At the same time, the air circulation driving device 70 can control the gas flow in the closed circulation channel system, maintain and treat the gas flow, avoid the external environment from being polluted, and ensure the stable operation of the device.

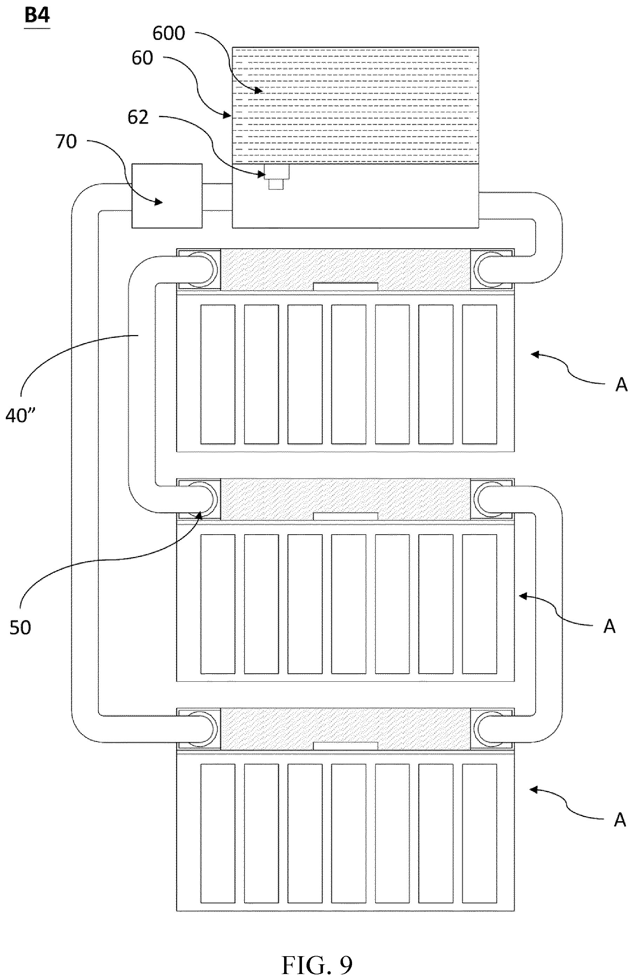

Please refer to Figs.9-11. The fourth embodiment of a stacked immersion cooling battery module B4 is introduced as follows. The stacked immersion cooling battery module B4 includes three layered structures A. Each layered structure A has the single-layered immersion cooling battery module so it will not be reiterated. The fourth embodiment is different from the third embodiment in that the fire-fighting water tank 60 is provided with a hot melt induction sprinkler head 62, which includes a hot melt material or a melting point sensitive material. When the hot melt induction sprinkler head 62 senses ambient temperature greater than a preset temperature, the hot melt induction sprinkler head 62 automatically melts or deforms such that the fire-fighting liquid 600 flows out. The fire-fighting liquid 600 may be non-conductive deionized water, fluorinated liquid (e.g., perfluorohexanone-like compounds), silicone oil, or synthetic insulating oil, etc.

The single-layered immersion cooling battery modules of each layered structure A are connected in series via the gas discharging tubes 40" and the corresponding connection tubes 50. The air circulation driving device 70 circulates the internal gas among the modules, thereby controlling the modules to have a uniform temperature.

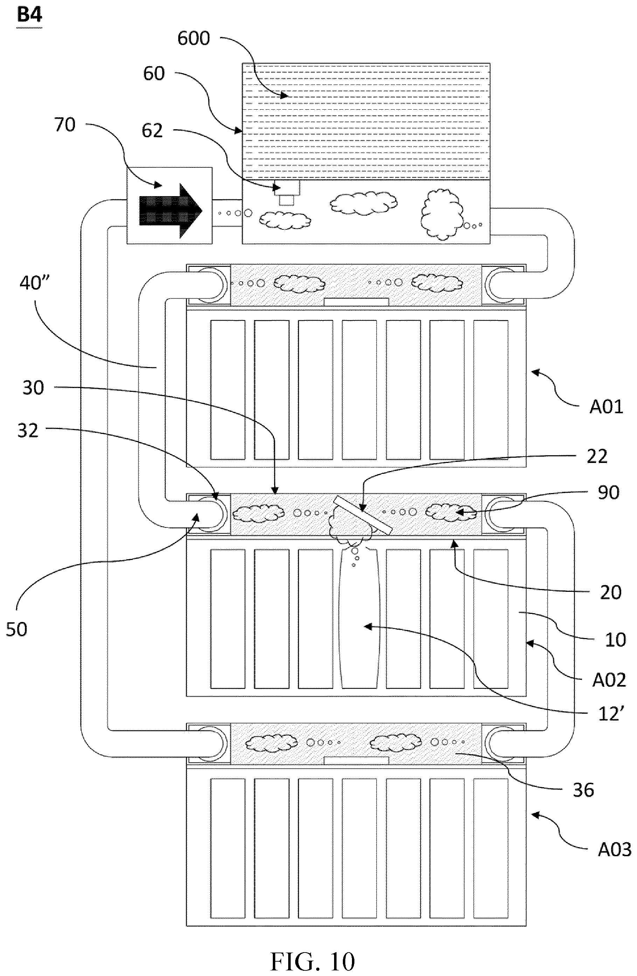

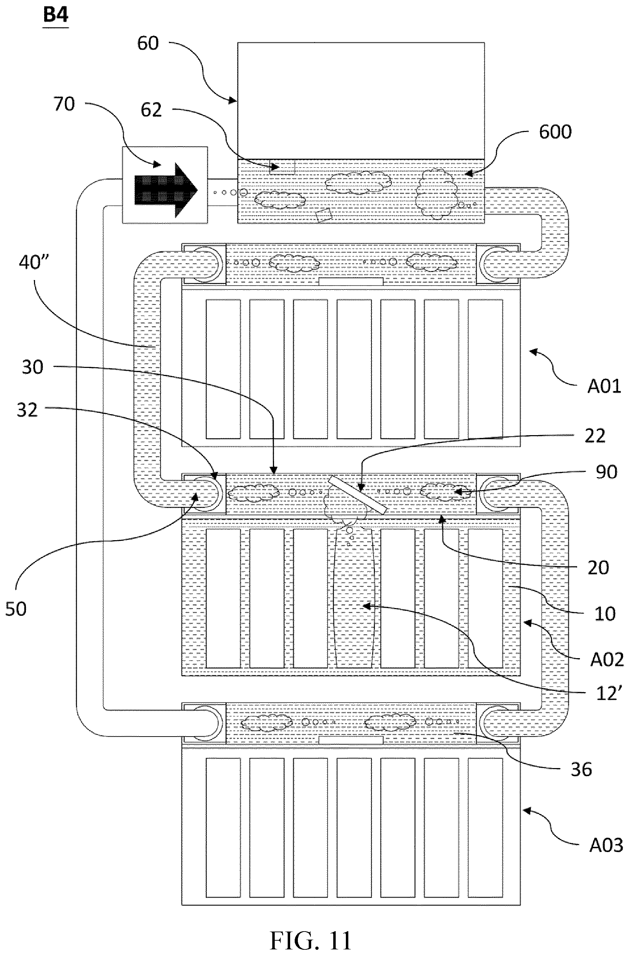

For example, as illustrated in Figs. 10 and 11, when one of the battery cells 12' in the single-layer immersion cooling battery module of the second layered structure A02 is damaged to experience thermal runaway, the internal temperature rises sharply to trigger a chain reaction. As a result, the battery cell 12' generates the generated gas 90 rather than cools down by itself. At this time, due to the increased pressure in the closed space, the pressure relieving and superheat releasing device 22 automatically opens the gas discharging channel 200, such that the accommodation space 100 communicates with the gas discharging channel 200. The generated gas 90 inside the tank 10 then flows into the gas filtering device 30 for the first-stage filtration. After the first-stage filtration, the filtered gas 90 is discharged from the gas outlet 32 to the connection tube 50 and then discharged to the outside through the gas discharging tube 40".

As illustrated in Fig.10, the air circulation driving device 70 drives the gas to circulate. The two gas discharging tubes 40" of the second layered structure A02 are respectively connected to the connection tubes 50 of the first layered structure A01 and the third layered structure A03. Therefore, the generated gas 90 that has experienced first-stage filtration will further experience second-stage filtration through the gas filtering devices 30 in the first layered structure A01 and the third layered structure A03. The toxic generated gas 90 is effectively absorbed by the adsorption layers 36 in each layered structure through this closed-loop channel system. At the same time, the material of the adsorption layer 36 of each layered structure achieves the maximum adsorption efficiency and also cools down the gas.

As illustrated in Fig.11, if the internal pressure or temperature is still not lower than a safe temperature after the second-stage filtration, the hot melt induction sprinkler head 62 will automatically activate, melt, or deform, allowing the fire-fighting liquid 600 to flow downward into each layered structure A. In the single-layered immersion cooling battery module experiencing thermal runaway, since the pressure relieving and superheat releasing device 22 has already opened the gas discharging channel 200, the fire-fighting liquid 600 will directly flow into the tank 10 for suppressing fire, thereby reducing the temperature and absorbing toxic substances or gases. In other layered structures where thermal runaway has not occurred, since the pressure relieving and superheat releasing devices 22 closes the gas discharging channel 200, the fire-fighting liquid 600 will remain within the gas filtering device 30 to provide thermal insulation and cooling protection.

In conclusion, the single-layer and stacked immersion cooling battery modules of the invention can effectively avoid the leakage of toxic gases during thermal runaway of the battery cells. They also ensure that the insulating cooling liquid does not corrode electrical connectors and cause leakage, thus improving the overall safety of the equipment, avoiding explosions or fires in the abnormal conditions of the battery modules, guaranteeing the safety of users and devices, reducing battery deterioration rates, and extending battery life. Furthermore, the structural design of the invention enables the stacked immersion cooling battery module to accommodate more battery cells within the same volume, thereby increasing energy storage density and making it suitable for large-scale applications. The gas discharging design in each layered structure ensures that all the battery modules are uniformly managed and protected, thereby reducing the risk of localized overheating or thermal runaway. When thermal runaway occurs, the stacked design integrates the gas discharging channels and the gas filtering devices, thereby effectively handling toxic and flammable gases and enhancing safety.

The embodiments described above are only to exemplify the invention and not to limit the scope of the invention. Therefore, any equivalent modification or variation according to the shapes, structures, features, or spirit disclosed by the invention is to be also included within the scope of the invention.

## Claims

1. A single-layered immersion cooling battery module (A1) comprising:
a tank (10) having an accommodation space (100), at least one battery cell (12) and a battery management circuit board (13) are arranged in the accommodation space (100), and the accommodation space (100) is filled with an insulating cooling liquid to immerse the at least one battery cell (12) and the battery management circuit board (13);
an upper cover (20) arranged on a top of the tank (10) and penetrated with a gas discharging channel (200), the gas discharging channel (200) is provided with a pressure relieving and superheat releasing device (22), so that the tank (10) and the upper cover (20) form a closed space, the pressure relieving and superheat releasing device (22) opens the gas discharging channel (200) based on pressure or temperature of the closed space, so that the accommodation space (100) communicates with the gas discharging channel (200), and the gas discharging channel (200) guides generated gas (90) in the closed space to flow out, so as to adjust pressure or temperature of the closed space; and
a gas filtering device (30), arranged on a top of the upper cover (20), covering the pressure relieving and superheat releasing device (22), a side of the gas filtering device (30) is provided with a gas outlet (32), and the gas filtering device (30) is configured to filter the generated gas (90) and discharge the filtered generated gas (90) from the gas outlet (32).

2. The single-layered immersion cooling battery module (A1) according to claim 1, wherein when pressure of the closed space is equal to or greater than a pressure threshold value or when temperature of the closed space is equal to or greater than a temperature threshold value, the pressure relieving and superheat releasing device (22) opens the gas discharging channel (200) or breaks such that the accommodation space (100) communicates with the gas discharging channel (200).

3. The single-layered immersion cooling battery module (A1) according to claim 1, wherein the pressure relieving and superheat releasing device (22) is a gasket or a sticker for sealing; when pressure of the closed space is equal to or greater than a pressure threshold value or when temperature of the closed space is equal to or greater than a temperature threshold value, the gasket or the sticker automatically breaks or deforms such that the accommodation space (100) communicates with the gas discharging channel (200).

4. The single-layered immersion cooling battery module (A1) according to claim **1,** wherein the gas filtering device (30) comprises an outer casing (34) and an adsorption layer (36), the outer casing (34) wraps the adsorption layer (36), and the adsorption layer (36) covers the pressure relieving and superheat releasing device (22).

5. The single-layered immersion cooling battery module (A1) according to claim 4, wherein the adsorption layer (36) is activated carbon, zeolite, acid neutralizer, or volatile catalyst.

6. The single-layered immersion cooling battery module (A1) according to claim 1, further comprising a gas discharging tube (40) that is arranged outside the tank (10) and connected to the gas outlet (32) for discharging the filtered generated gas (90).

7. The single-layered immersion cooling battery module (A1) according to claim 1, wherein an electrical connector (24) is arranged above the upper cover (20), the electrical connector (24) is provided with electrical plugs (241), and horizontal heights of the electrical plugs (241) are higher than a height of a surface of the insulating cooling liquid (11).

8. The single-layered immersion cooling battery module (A1) according to claim 1, wherein a bottom of the tank (10) is provided with an aligned recess (14), which is recessed toward the closed space to form a clearance space outside the tank(10).

9. A stacked immersion cooling battery module comprising:
layered structures (A) each having the single-layered immersion cooling battery module (A1) of one of claims 1-5, and the single-layered immersion cooling battery modules (A1) of the layered structures (A) are vertically stacked; and
a gas discharging tube (40, 40', 40") arranged outside the tanks (10) of the layered structures (A) and connected to the gas outlets (32) of the layered structures (A) for discharging the generated gas (90).

10. The stacked immersion cooling battery module according to claim 9, wherein a lower side of the gas discharging tube (40, 40', 40") is penetrated with holes (400) respectively connected to the gas outlets (32) of the layered structures (A), and an upper side of the gas discharging tube (40, 40', 40") guides the generated gas (90) to outside.

11. The stacked immersion cooling battery module according to claim 10, wherein each of the holes (400) is connected to the gas outlet (32) of each of the layered structures (A) through a connection tube (50).

12. The stacked immersion cooling battery module according to claim 9, wherein an electrical connector (24) is arranged above the upper cover (20) of the single-layered immersion cooling battery module (A1) of each of the layered structures (A) , the electrical connector (24) is provided with electrical plugs (241), and horizontal heights of the electrical plugs (241) of each of the layered structures (A) are higher than a height of a surface of the insulating cooling liquid of each of the layered structures (A).

13. The stacked immersion cooling battery module according to claim 12, wherein a bottom of the tank (10) in the single-layered immersion cooling battery module (A1) of each of the layered structures (A) is provided with an aligned recess (14), which is recessed toward the closed space to form a clearance space; the aligned recess (14) of the upper layered structure (A) is aligned to the electrical connector (24) of the lower layered structure (A) to tightly stack the layered structures.

14. A stacked immersion cooling battery module comprising:
layered structures (A) each having the single-layered immersion cooling battery module (A1) of one of claims 1-5, and the single-layered immersion cooling battery modules (A1) of the layered structures (A) are vertically stacked;
connection tubes (50) respectively connected to the gas outlets (32) of the layered structures (A); and
gas discharging tubes (40, 40', 40") arranged outside the tanks (10) of the layered structures (A) and respectively connected to the corresponding connection tubes (50) to form a closed loop channel.

15. The stacked immersion cooling battery module according to claim 14, wherein an electrical connector (24) is arranged above the upper cover (20) of the single-layered immersion cooling battery module (A1) of each of the layered structures (A), the electrical connector (24) is provided with electrical plugs (241), and horizontal heights of the electrical plugs (241) of each of the layered structures (A) are higher than a height of a surface of the insulating cooling liquid of each of the layered structures (A).

16. The stacked immersion cooling battery module according to claim 15, wherein a bottom of the tank (10) in the single-layered immersion cooling battery module (A1) of each of the layered structures (A) is provided with an aligned recess (14), which is recessed toward the closed space to form a clearance space; the aligned recess (14) of the upper layered structure (A) is aligned to the electrical connector (24) of the lower layered structure (A) to tightly stack the layered structures.

17. The stacked immersion cooling battery module according to claim 14, further comprising:
a fire-fighting water tank (60), accommodating a fire-fighting liquid (600), arranged above the layered structures (A) and connected to the gas discharging tube (40"); and
an air circulation driving device (70) arranged on one side of the fire-fighting water tank (60), connected to the gas discharging tube(40"), and configured to drive the generated gas to circulate among the single-layered immersion cooling battery modules (A1) of each of the layered structures (A).

18. The stacked immersion cooling battery module according to claim 17, wherein the fire-fighting water tank (60) is provided with a hot melt induction sprinkler head (62), which includes a hot melt material or a melting point sensitive material, when the hot melt induction sprinkler head (62) senses ambient temperature greater than a preset temperature, the hot melt induction sprinkler head (62) automatically melts or deforms such that the fire-fighting liquid (600) flows out.

19. The stacked immersion cooling battery module according to claim 17, wherein the fire-fighting liquid (600) is non-conductive deionized water, fluorinated liquid, silicone oil, or synthetic insulating oil.
